# EUROPÄISCHE PATENTSCHRIFT

(11) **EP 3 478 127 B1**
(45) Veröffentlichungstag und Bekanntmachung des Hinweises auf die Patenterteilung: **23.06.2021**
(21) Anmeldenummer: 17732895.2
(22) Anmeldetag: 26.06.2017
(51) Int. Cl.: A47B 88/969, F16B 12/40, F16B 12/44

(54) **VORRICHTUNG ZUR EINTEILUNG EINES INNENRAUMS EINES BEWEGBAREN MOEBELTEILS UND MOEBEL MIT EINER SOLCHEN VORRICHTUNG**
DEVICE FOR DIVIDING AN INTERIOR OF A MOVEABLE FURNITURE PART AND FURNITURE HAVING A DEVICE OF THIS TYPE
DISPOSITIF DE COMPARTIMENTAGE D'UN ESPACE INTÉRIEUR D'UN ÉLÉMENT DE MEUBLE MOBILE ET MEUBLE ÉQUIPÉ D'UN TEL DISPOSITIF

(30) Priorität: 30.06.2016 DE 202016103477 U
(43) Veröffentlichungstag der Anmeldung: 08.05.2019
(73) Patentinhaber: Grass GmbH, 6973 Höchst (AT)
(72) Erfinder: GRABHER, Guenter, 6972 Fußach (AT)
(74) Vertreter: Otten, Roth, Dobler & Partner mbB Patentanwälte
(86) Internationale Anmeldenummer: PCT/EP2017/065636
(87) Internationale Veröffentlichungsnummer: WO 2018/001926

(56) Entgegenhaltungen:
- EP-A2- 1 723 873
- DE-A1- 2 445 015
- DE-U1- 8 624 820

## Beschreibung

### Stand der Technik

Bei Möbeln wie zum Beispiel Wohn- oder Küchenmöbeln, welche bewegbare Möbelteile wie Schubladen aufweisen, in deren Innenraum Gegenstände unterbringbar sind, sind Einteilungssysteme zur Unterteilung bzw. Einteilung des Innenraums bekannt. Mit dem Einteilungssystem lässt sich der Innenraum des Möbelteils in mehrere Bereiche unterteilen, beispielsweise um unterschiedliche Gegenstände wie z. B. Besteckarten in jeweils dazugehörigen Bereichen getrennt voneinander bzw. sortiert unterbringen zu können.

Bei bisherigen Systemen ist ein vergleichsweise großer Aufwand nötig, um das Einteilungssystem auf das jeweilige Möbelteil mit jeweils unterschiedlichen Abmessungen des Innenvolumens anzupassen, insbesondere um eine gewünschte Unterteilung und eine effektive Ausnutzung des vorhandenen Innenraums des Möbelteils zu ermöglichen.

Die DE 86 24 820 U1, EP 1 723 873 A2 und DE 24 45 015 A1 sind dem Stand der Technik zuzurechnen.

### Aufgabe und Vorteile der Erfindung

Aufgabe der vorliegenden Erfindung ist es, ein Einteilungssystem zum Unterbringen von Gegenständen für ein Innenvolumen von bewegbaren Möbelteilen vorteilhaft bereitzustellen, insbesondere im Hinblick auf die einfache und individuelle Anpassung der Einteilung an das jeweilige Möbelteil.

Diese Aufgabe wird durch den unabhängigen Anspruch gelöst.

Die abhängigen Ansprüche betreffen vorteilhafte und zweckmäßige Weiterbildungen der Erfindung.

Die Erfindung geht aus von einer Vorrichtung zur Einteilung eines Innenraums eines bewegbaren Möbelteils, insbesondere eines Innenraums einer Schublade, wobei die Vorrichtung ein Innenwandelement und ein auf das Innenwandelement abgestimmtes Steckorgan aufweist, die miteinander verbindbar sind, wobei aus mehreren Innenwandelementen ein Rahmenteil der Vorrichtung bildbar ist, das im Innenraum des Möbelteils anordenbar ist.

Die Erfindung betrifft eine Schubladeninneneinteilungs-Vorrichtung zur Einteilung eines Innenraums einer Schublade z. B. zur Bildung eines Besteckkastens.

Das Innenwandelement kann als einzelnes Teil oder mit anderen Innenwandelementen zusammengesteckt als Teil des Rahmenteils zur Einteilung des z. B. Schubladen-Innenraums dienen.

Der Kern der Erfindung liegt darin, dass Verriegelungsmittel mit einem Riegelabschnitt an dem Innenwandelement und einer Aufnahmekontur an dem Steckorgan vorhanden sind, wobei der Riegelabschnitt und die Aufnahmekontur derart aufeinander abgestimmt sind, dass das Steckorgan und das Innenwandelement im verbundenen Zustand miteinander verriegelbar sind, wobei in einem verbundenen Zustand des Steckorgans und des Innenwandelements der Riegelabschnitt durch ein plastisches Verformen aus einer Ausgangsstellung in eine Verriegelungsstellung bringbar ist, so dass der Riegelabschnitt in der Verriegelungsstellung in die Aufnahmekontur am Innenwandelement hineinragt.

Mit dem Verriegelungszustand ist die Steckverbindung zwischen dem Steckorgan und dem Innenwandelement nicht mehr aufhebbar bzw. können das Steckorgan und das Innenwandelement nicht auseinandergenommen werden. Erst wenn der in die Aufnahmekontur hineinragende Eingriff des Riegelabschnitts aufgehoben wird, z. B. durch eine plastische Verformung des Riegelabschnitts zurück in die Ausgangsstellung, falls dies überhaupt möglich ist, und damit die Verriegelung aufgehoben ist, lassen sich das Steckorgan und das Innenwandelement wieder auseinandernehmen bzw. voneinander trennen.

Vorteilhafterweise erfolgt das plastische Verformen des Riegelabschnitts aus der Ausgangsstellung in Richtung zur Aufnahmekontur hin bzw. in Richtung einer inneren Grundfläche der Aufnahmekontur. Das von der Aufnahmekontur bereitgestellte bzw. umschlossene Freivolumen stellt den Raum für die Unterbringung des umgebogenen Riegelabschnitts bereit. Vorzugsweise sind der Riegelabschnitt und die Aufnahmekontur so aufeinander abgestimmt, dass jeweilige Randbereich in gegenseitige Anlage gelangen, wenn der Riegelabschnitt plastisch verformt wird.

Mit der plastischen Verformung wird eine mechanische Verriegelung eingerichtet, vorzugsweise derart, dass im Verriegelungszustand das Innenwandelement und das Steckorgan nicht relativ zueinander bewegbar sind. Das gebildete Rahmenteil ist insbesondere im verriegelten Zustand als starres Bauteil im Innenraum vorhanden. Das Rahmenteil kann insbesondere aus dem Innenraum der Schublade bzw. als Ganzes aus dem Möbelteil herausgenommen und wieder eingesetzt werden z. B. für Reinigungszwecke, falls das Rahmenteil nicht dauerhaft bzw. nicht zusätzlich unlösbar fixiert ist, wie beispielsweise in der Schublade eingeklebt ist.

Mit der Erfindung wird vorteilhafter Weise eine einfach beziehungsweise sicher einrichtbare Verriegelung zwischen Innenwandelement und Steckorgan bereitgestellt.

Ein Monteur kann hierzu mühelos zum Beispiel mit der Spitze eines Schraubendrehers drückend auf die Riegelabschnitte einwirken und diese nach innen in die dazugehörigen Aufnahmekonturen am Steckorgan hineinbiegen bzw. plastisch verformen.

Ein Auseinandernehmen bzw. Trennen des Steckorgans und des Innenwandelements, wenn diese einmal miteinander verriegelt sind, kann nicht selbsttätig erfolgen bzw. ist nur durch ein bewusstes bzw. exaktes Einwirken unter einem Kraftaufwand insbesondere durch ein Zurückbiegen des Riegelabschnitts in dessen Ausgangsstellung möglich.

Das Innenwandelement oder die mehreren Innenwandelemente sind von Komponenten des Möbelteils insbesondere von Front-, Seiten- bzw. Zargen- und/oder Rückwandbereichen z. B. der Schublade zu unterscheiden, da diese Elemente wie auch ein Schubladenboden nicht zur erfindungsgemäßen Vorrichtung gehören, sondern die Schublade selbst bilden. Die erfindungsgemäße Vorrichtung ist vielmehr zusätzlich zum eigentlichen Möbelteil bzw. zur Schublade vorhanden und kann aus dieser auch wieder entfernt werden, so dass das Möbelteil bzw. die Schublade bzw. deren Innenraum ohne die Einteilungsvorrichtung nutzbar ist.

Das Rahmenteil bildet vorzugsweise eine durchgehend geschlossene Umrahmung um ein mit dem Rahmenteil gebildetes Einteilungsvolumen der erfindungsgemäßen Vorrichtung. Das Rahmenteil ist vorzugsweise unten offen bzw. ohne Boden. Die Vorrichtung kann genau ein Rahmenteil aufweisen, weist jedoch in der Regel bzw. vorzugsweise mehrere Rahmenteile auf, die untereinander die gleiche Größe und/oder unterschiedliche Größen aufweisen.

Die Einteilungsvorrichtung kann auch Bereiche bzw. Zwischenbereiche aufweisen, welche zwischen zwei mit einem Abstand zueinander vorhandenen Rahmenteilen ausgebildet ist. In einem Zwischenbereich kann ein Trennelement oder ein einzelnes Innenwandelement mit einem Steckorgan zusätzlich zu den benachbarten Rahmenteilen positioniert sein, zum Beispiel um den Zwischenbereich zu begrenzen und/oder in mehrere Teilvolumina zu unterteilen.

Ein Rahmenteil ist vorzugsweise viereckig bzw. quadratisch oder rechteckig im Grundriss und besteht aus zwei gegenüberliegenden Längsseiten und zwei zu den Längsseiten winklig ausgerichteten Querseiten. Die Längsseiten sind vorzugsweise zueinander parallel und auch die Querseiten sind vorzugsweise zueinander parallel. Eine Längsseite besteht aus genau einem Innenwandelement oder aus zwei oder mehr zusammengesteckten Innenwandelementen. Entsprechend besteht eine Querseite aus genau einem Innenwandelement oder aus mehreren zusammengesteckten Innenwandelementen.

Die Vorrichtung umfasst Innenwandelemente, die vorzugsweise aus einem Satz von Innenwandelement-Typen aus wenigen standardisiert bereitgestellten Bauteilen gebildet sind.

Vorzugsweise unterscheiden sich in einem Satz von Innenwandelement-Typen die einzelnen Typen nur durch die jeweilige Länge des Innenwandelements. Die einzelnen Innenwandelemente des Satzes von Innenwandelement-Typen sind bis auf die Länge ansonsten vorzugsweise identisch ausgebildet.

Insbesondere umfasst ein Satz von Innenwandelement-Typen der Einteilungsvorrichtung vorzugsweise mehrere bzw. genau 2 bis 5 bis auf die jeweilige Länge identische Typen von Innenwandelementen.

Ein Innenwandelement besteht vorzugsweise aus einem Metallmaterial zum Beispiel aus einem korrosionsbeständigen Stahl- oder einem Aluminiummaterial. Alternativ ist ein Innenwandelement aus einen Kunststoffmaterial oder einem Verbundwerkstoff möglich.

Das Innenwandelement der erfindungsgemäßen Vorrichtung ist vorzugsweise durchgehend hohl und in der Grundform plattenartig bzw. quaderförmig und weist bezogen auf den Nutzzustand in dem Möbelteil zwei gegenüberliegende parallel und aufrecht ausgerichtete Hauptseiten auf, welche oben und unten von jeweils einer streifenförmigen horizontal ausgerichteten oberen Schmalseite bzw. einer Oberseite und einer streifenförmigen horizontal ausgerichteten unteren Schmalseite bzw. einer Unterseite begrenzt werden.

Eine in Längsrichtung vordere aufrechte Schmalseite bzw. vordere Stirnseite, welche an die beiden Hauptseiten und die beiden Schmalseiten vorne angrenzt, ist offen bzw. hohl ausgebildet. Ebenso ist eine in Längsrichtung hintere aufrechte Schmalseite bzw. hintere Stirnseite, welche an die beiden Hauptseiten und die beiden Schmalseiten hinten angrenzt, offen bzw. hohl ausgebildet. In vorzugsweise beide offene Stirnseiten ist jeweils ein Steckorgan vorzugsweise im Reibkontakt einsteckbar, so dass ein Abschnitt des Steckorgans gemäß der Einstecktiefe im betreffenden Innenwandelement eingesteckt ist und damit am Innenwandelement zunächst durch Haftreibung gehalten ist. Ein verbleibender nicht eingesteckter Teil des Steckorgans steht aus dem Innenwandelement stirnseitig heraus. Der herausstehende Teil des Steckorgans kann in eine offene Stirnseite eines anderen Innenwandelements eingesteckt werden oder an einer Gegenfläche anstehen, z. B. einer Hauptseite eines anderen Innenwandelements oder an einer Innenseite einer Front-, Seiten- oder Rückwand des bewegbaren Möbelteils.

Die beiden Hauptseiten eines Innenwandelements sind vorzugsweise vollflächig bzw. zumindest im Wesentlichen durchgehend geschlossen bzw. eben ausgebildet. Insbesondere sind in der Fläche der Hauptseiten keine Öffnungen, keine Erhebungen bzw. keine Vertiefungen vorhanden. Die beiden Hauptseiten des Innenwandelements, also außen und innen, bilden eine vier-bzw. rechteckige oder im Wesentlichen vier- oder rechteckige geschlossene Flächenform.

Vorzugsweise ist der Riegelabschnitt in der Verriegelungsstellung nach dem plastischen Verformen derart in der Aufnahmekontur versenkt, dass kein Abschnitt des Riegelabschnitts nach außen über eine Ebene übersteht, welche durch eine Außenseite des Innenwandelements festgelegt ist. Insbesondere steht in der Verriegelungsstellung kein Abschnitt des Riegelabschnitts nach außen über eine Schmalseite bzw. Unterseite des Innenwandelements über.

Der Riegelabschnitt bildet daher nach außen keine Störkontur am Innenwandelement.

Vorteilhafterweise ist das Rahmenteil aus mehreren Innenwandelementen gebildet, wobei zwei Innenwandelemente mit dem Steckorgan durch eine Steckverbindung miteinander verbindbar sind, und wobei das Rahmenteil zur Einteilung des Möbelteil-Innenraums im Innenraum des Möbelteils anordenbar ist. Damit lässt sich ein stabil und exakt zusammengebautes Rahmenteil herstellen. Insbesondere sind bei dem Rahmenteil mit den mehreren z. B. vier Innenwandelementen mehrere Steckorgane vorhanden, wobei jedes Steckorgan vorzugsweise mit genau zwei Innenwandelementen verbindbar ist.

Für die Verbindung eines Steckorgans mit zwei Innenwandelementen bzw. mit einem ersten und einem zweiten Innenwandelement ist für die Verriegelung mit dem ersten Innenwandelement zumindest eine dazugehörige Aufnahmekontur am Steckorgan vorgesehen, in welche ein Riegelabschnitt des ersten Innenwandelements plastisch verformbar bzw. hinein verbiegbar ist. Vorzugsweise sind genau zwei Riegelabschnitte des Innenwandelements in genau eine dazugehörige Aufnahmekontur am Steckorgan hinein verformbar. Besonders bevorzugt sind genau zwei Aufnahmekonturen an einem Steckorgan vorhanden, in welche jeweils genau zwei bzw. insgesamt vier Riegelabschnitte des Innenwandelements plastisch hinein verformbar sind.

An einem für das Verbinden von zwei Innenwandelementen ausgebildeten Steckorgan sind dementsprechend vorzugsweise genau zwei erste Aufnahmekonturen für das erste Innenwandelement und genau zwei zweite Aufnahmekonturen für das zweite Innenwandelement vorhanden.

Am ersten Innenwandelement sind für ein erstes Steckorgan vorzugsweise vier Riegelabschnitte vorgesehen, wobei genau zwei Riegelabschnitte in die eine erste Aufnahmekontur des Steckorgans hinein verformbar sind und genau zwei weitere Riegelabschnitte in die andere erste Aufnahmekontur des Steckorgans hinein verformbar sind.

Entsprechend sind an einem Innenwandelement vorzugsweise auf entsprechende Weise jeweils vier weitere Riegelabschnitte für ein weiteres am anderen Stirnende einsteckbares Steckorgan vorgesehen. Denn ein Innenwandelement ist in der Regel mit zwei Steckorganen im Bereich seiner beiden gegenüberliegenden Stirnseiten verbindbar, also mit jeweils einem Steckorgan an beiden Stirnseiten.

Die zu den ersten vier Riegelabschnitten vier weiteren Riegelabschnitte an dem Innenwandelement sind für das entsprechende Verriegeln mit einem weiteren Steckorgan vorgesehen. Die vier weiteren Riegelabschnitte an dem Innenwandelement, dienen dazu, um in zwei Aufnahmekonturen des weiteren Steckorgans hinein verformt zu werden.

Das Steckorgan ist zur Bildung eines Rahmenteils vorzugsweise als Eckverbinder ausgestaltet. Für ein rechteckförmiges Rahmenteil aus zum Beispiel vier Innenwandelementen sind entsprechend vier als Eckverbinder ausgestaltete Steckorgane notwendig. Jeder Eckverbinder weist zwei rechtwinklig zueinander ausgerichtete Steckabschnitte auf, wobei im zusammengesteckten Zustand der erste Steckabschnitt in ein erstes Innenwandelement eingreift und der zweite Steckabschnitt in ein zweites Innenwandelement eingreift. Das bedeutet, dass in jedem der vier Eckbereiche des gebildeten Rahmenteils genau ein Eckverbinder vorhanden ist.

Weiter ist es von Vorteil, dass das Innenwandelement als Hohlprofil ausgebildet ist. Insbesondere sind die Innenwandelemente eines Rahmenteils jeweils als Hohlprofil aufgebaut, vorzugsweise untereinander identisch aufgebaut, abgesehen von der Länge, wonach jeweils zwei Innenwandelemente die gleiche Länge aufweisen. Im Verbindungszustand der Innenwandelemente greift ein Steckabschnitt eines Steckorgans bzw. eines Eckverbinders in ein hohles Inneres des Innenwandelements bzw. in ein Hohlvolumenabschnitt des Hohlprofils bzw. des Innenwandelements ein. Der andere Steckabschnitt des Steckorgans greift entsprechend in den Hohl volumenabschnitt des anderen Innenwandelements ein.

Mit dem Hohlprofil ist vorteilhaft ein vergleichsweise geringes Gewicht und ein geringer Materialaufwand zur Herstellung der Innenwandelemente verbunden.

Es ist erfindungsgemäß, dass der Riegelabschnitt an einer als Schmalseite ausgebildeten Unterseite des Innenwandelements ausgebildet ist. Damit sind bei der Verwendung der Vorrichtung die Verriegelungsmittel verdeckt bzw. für eine Bedienperson des bewegbaren Möbelteils nicht sichtbar, was aus optischen Gründen vorteilhaft ist. Vorzugsweise sind an der Unterseite eines Innenwandelements mehrere Riegelabschnitte z. B. acht Riegelabschnitte vorgesehen. Die jeweiligen Riegelabschnitte sind vorzugsweise in einem auf die Länge des Innenwandelements bezogenen vorderen und hinteren Endbereich des Innenwandelements vorhanden. Denn nur in diesen Bereich ragt das Steckorgan hinein, wobei der Bereich z. B. an beiden Enden auf der Unterseite circa 2 bis 3 Zentimeter der Länge des Innenwandelements ausmacht. Entsprechend beträgt die maximale Einstecktiefe des Steckorgans bzw. damit die Länge eines Steckabschnitts des Steckorgans vorzugsweise ca. 2 bis 3 Zentimeter. Bevorzugt sind in beiden Längs-Endbereichen auf der Unterseite jeweils mehrere z. B. vier Riegelabschnitte vorhanden.

Ein Riegelabschnitt besteht vorzugsweise aus dem Material des Innenwandelements. Der Riegelabschnitt ist zum Beispiel ein laschenförmiger teils freigeschnittener Blechabschnitt bzw. ein durch einen Einschnitt im Material des Innenwandelements gebildeter Abschnitt, der damit vorgebbar und einfach verbiegbar ist.

Vorzugsweise ist der Riegelabschnitt durch eine aus dem Wandmaterial des Innenwandelements frei geschnittene Lasche gebildet, die lediglich über eine Materialbrücke mit dem verbleibenden Wandmaterial des Innenwandelements verbunden ist. Die Materialbrücke bildet vorzugsweise die Biegelinie beim plastischen Verformen des Riegelabschnitts.

Besonders vorteilhaft sind zwei gegenüberliegende Biegeabschnitte im Bereich einer Ausnehmung bzw. eines Materialeinschnitts auf der Unterseite des Innenwandelements vorhanden. Der Riegelabschnitt liegt in seiner Ausgangsstellung in der Ebene der Unterseite des Innenwandelements bzw. bildet einen Teil der ebenen flächigen Unterseite. Zum Verriegeln wird der Riegelabschnitt nach innen in die Aufnahmekontur des benachbart im Innenwandelement eingesteckten Steckorgans eingedrückt. Dies kann vorteilhaft mit einer schlanken Betätigungshilfe wie beispielsweise der Spitze eines Schraubendrehers erfolgen.

Entsprechend ist es erfindungsgemäß, dass die Aufnahmekontur an einer Unterseite des Steckorgans vorhanden ist. Denn die Unterseite des Steckorgans ist im eingesteckten Zustand des Steckorgans im Innenwandelement oberhalb bzw. insbesondere in direkter Nachbarschaft zur Innenwandelement-Unterseite, an welcher der wenigstens eine Riegelabschnitt vorhanden ist. Die Aufnahmekontur ist bezogen auf die gewünschte bzw. verbindend wirkende Relativstellung zwischen dem Steckorgan und dem Innenwandelement derart abgestimmt auf den Riegelabschnitt, dass der Riegelabschnitt passend in die Aufnahmekontur eingreifend verformbar bzw. umbiegbar ist und so die Verriegelung funktionsrichtig einrichtbar ist.

Die Position, die Form und die Größe der Aufnahmekontur am Steckorgan einerseits und des Riegelabschnitts am Innenwandelement andererseits sind hierfür exakt bzw. passend aufeinander abgestimmt.

Eine weitere vorteilhafte Variante der Erfindung ist darin zu sehen, dass mehrere Riegelabschnitte an einem Innenwandelement vorgesehen sind.

Damit lässt sich ein Innenwandelement stabiler bzw. zuverlässiger mit einem eingesteckten Steckorgan verriegeln. Demgemäß ist es auch von Vorteil, dass an einem Steckorgan mehrere Aufnahmekonturen für ein zuordenbares Innenwandelement vorgesehen sind.

Vorzugsweise kann eine Verriegelung zwischen einem Steckorgan und einem Innenwandelement stabil und belastbar eingerichtet werden. Bevorzugt ist eine aufeinander abgestimmte Anzahl an Aufnahmekonturen und dazugehörigen Riegelabschnitten für die verriegelnde Verbindung zwischen einem Steckorgan und einem Innenwandelement vorgesehen.

Nachfolgend wird eine Variante der Erfindung betrachtet, die ein Rahmenteil mit einem im Grundriss viereckigen Aufbau aufweist, zusammengebaut aus vier einzelnen

Innenwandelementen, welche zwei Längsseiten und zwei Querseiten des Rahmenteils bereitstellen, wobei in den vier Eckbereichen des Rahmenteils jeweils genau ein Steckorgan, das als Eckverbinder gestaltet ist, vorhanden ist. Der Eckverbinder ist mit seinen jeweiligen Steckabschnitten in zwei winklig stehende bzw. benachbarte Innenwandelemente eingesteckt. Der Eckverbinder umfasst demgemäß zwei plattenartige, rechtwinklig zueinander stehende Steckabschnitte, die an einer Schmalseite miteinander verbunden sind, z. B. in der Art eines Winkelelements.

An jedem Eckverbinder sind unterseitig vorzugsweise vier Aufnahmekonturen, jeweils zwei Aufnahmekonturen für jedes der beiden winklig stehenden Innenwandelemente ausgebildet. Zwei Aufnahmekonturen sind unterseitig an dem einen Steckabschnitt und zwei Aufnahmekonturen sind unterseitig an dem anderen Steckabschnitt ausgestaltet. Die Aufnahmekonturen sind vorzugsweise alle identisch zum Beispiel als jeweils quaderförmige Materialaussparung im Material des Eckverbinders gebildet.

Jedes der dazugehörigen bzw. passenden vier Innenwandelemente weist jeweils in einem Endbereich der Unterseite des Innenwandelements beispielsweise vier Riegelabschnitte auf, so dass unterseitig an einem Innenwandelement in beiden Endabschnitten zusammen acht Riegelabschnitte vorgesehen sind. Die Riegelabschnitte sind in beiden Endabschnitten des Innenwandelements vorzugsweise gleichartig ausgestaltet. In einem Endabschnitt sind zur Längsachse der Unterseite des Innenwandelements gegenüberliegende zwei erste Riegelabschnitte vorhanden. Daneben bzw. in der Längsrichtung etwas versetzt dazu sind zur Längsachse der Unterseite des Innenwandelements gegenüberliegende zwei weitere bzw. zwei zweite Riegelabschnitte vorhanden. Am anderen Endabschnitt auf der Unterseite des gleichen Innenwandelements sind auf entsprechende Weise vier weitere Riegelabschnitte vorhanden. Anders ausgedrückt sind bei der beschriebenen Ausbildungsform jeweils zwei Paare von Riegelabschnitten jeweils in beiden Endabschnitten vorhanden.

Bei dem Rahmenteil im noch nicht verriegelten Steckzustand der Eckverbinder sind in einem ersten Endbereich des Innenwandelements die zwei gegenüberliegenden ersten Riegelabschnitte benachbart bzw. unterhalb der ersten Aufnahmekontur des einen Steckabschnitts des Eckverbinders positioniert und etwas versetzt dazu sind die zwei anderen gegenüberliegenden zweiten Riegelabschnitte benachbart bzw. unterhalb der zweiten Aufnahmekontur des einen Steckabschnitts des Eckverbinders positioniert. Die Riegelabschnitte in der Ausgangsstellung erstrecken sich in der Ebene der Unterseite des Innenwandelements.

Zur Verriegelung werden die zwei ersten Riegelabschnitte in die erste Aufnahmekontur eingreifend hineingebogen, ebenso wie die zwei zweiten Riegelabschnitte in die zweite Aufnahmekontur eingreifend hineingebogen werden.

Am anderen Endbereich des gleichen Innenwandelements ist ein weiterer Eckverbinder mit einem Steckabschnitt entsprechend eingesteckt und verriegelbar. Auch hierbei werden zur Verriegelung zwei gegenüberliegende erste Riegelabschnitte unterseitig am Innenwandelement in eine erste Aufnahmekontur des Eckverbinders hineingebogen und zwei gegenüberliegende zweite Riegelabschnitte unterseitig am Innenwandelement in eine zweite Aufnahmekontur des Eckverbinders hineingebogen.

Der andere Steckabschnitt des einen Eckverbinders am ersten Innenwandelement wird entsprechend mit einem weiteren bzw. zweiten Innenwandelement zusammengesteckt und verriegelt.

Und auch der andere Steckabschnitt des anderen Eckverbinders am ersten Innenwandelement wird entsprechend mit einem dritten Innenwandelement zusammengesteckt und verriegelt.

Mit der Mehrzahl an Aufnahmekonturen und den mehreren damit zusammenwirkenden Riegelabschnitten wird eine stabile und gesicherte Verbindung ermöglicht. Außerdem wird mit dem Verriegeln wie weiter unten erläutert ist eine exakte Relativpositionierung zwischen einem Steckorgan und dem Innenwandelement erreicht.

Gemäß einer vorteilhaften Modifikation der Erfindung sind der Riegelabschnitt und die Aufnahmekontur derart aufeinander abgestimmt, dass mit dem Einrichten der Verriegelungsstellung des Riegelabschnitts das Innenwandelement und das Steckorgan zwangsweise relativ zueinander bewegbar sind, bis eine Anschlag-Steckstellung zwischen dem Steckorgan und dem Innenwandelement erreicht ist. Der dabei zurückgelegte Weg liegt insbesondere im Bereich eines Millimeters oder weniger. Damit wird mit dem Vorgang der Verriegelung gleichzeitig auch eingerichtet, dass die Steckpartner, die aus einem Steckorgan und einem Innenwandelement bestehen, in eine exakte bzw. gewünschte Verbindungsstellung bzw. Anschlag-Steckstellung gelangen. Dabei findet in der Regel eine Relativbewegung statt, welche einer Bewegung entspricht, wonach das Steckorgan etwas weiter in das Innenwandelement hinein bzw. weiter in Einsteckrichtung verschoben wird, ausgehend von einem ortsfesten Innenwandelement. Die Verschiebung ist begrenzt, indem ein Anschlagabschnitt des Steckorgans zum Beispiel an einem als mechanischer Anschlag wirkenden Anschlagabschnitt des Innenwandelements anstößt. Die Abschnitte der verbundenen Innenwandelemente, welche gegenseitig in Anlage kommen sollen sind nach dem beschriebenen Verriegeln dabei vorteilhafterweise nahezu spaltfrei bzw. fest aneinandergedrückt. Dies ist hinsichtlich eines gewünschten Endmaßes des Rahmenteils, aus optischen Gründen und aus praktischen Gründen, was eine mögliche Schmutzfangsituation durch größere Spaltabstände angeht, vorteilhaft.

Mit dem beschriebenen Erreichen der Anschlagstellung der Anschlagabschnitte kann ein etwaiger vorher existierender geringer Fehlabstand der Anschlagabschnitte der miteinander zusammengesteckten Steckpartner ausgeschlossen bzw. eine gegenseitige Einstecktiefe der Steckpartner, die bei einem idealen Zusammenbauzustand der Steckpartner vorhanden sein soll bzw. muss, zwangsweise vorgegeben werden, was vorteilhaft gekoppelt mit der Verriegelung erfolgt. Spätestens mit dem Erreichen des verriegelten Zustands ist die ideale Einstecksituation der Steckpartner erreicht und damit das Rahmenteil funktionsrichtig zusammengebaut. Dann weist das Rahmenteil auch die exakt vorgegebenen bzw. geforderten Abmessungen auf, um spalt- und spannungsfrei passend in den Innenraum des Möbelteils bzw. der Schublade eingesetzt werden zu können. Bei nicht exakt zueinander positionierten Innenwandelementen können andernfalls existierende Fehlabmessungen im Millimeterbereich, was zum Beispiel die Außenmaße des zusammengebauten Rahmenteils angeht, dazu führen, dass das Rahmenteil bzw. die mehrere zusammengesetzte Rahmenteile umfassende Einteilungsvorrichtung etwas zu große Dimensionen aufweist und nicht genau in den Innenraum des Möbelteils bzw. der Schublade hineinpasst bzw. verformt wird oder darin verklemmt oder verkantet.

Gemäß einer vorteilhaften Modifikation des Erfindungsgegenstandes weist der Riegelabschnitt eine Anlagefläche auf, welche für ein Zusammenwirken mit einer Gegenfläche an der Aufnahmekontur ausgebildet ist. Damit werden zum Beispiel getrieblich wirkende Flächen bereitgestellt, welche die Relativbewegung in Steckrichtung zwischen dem Steckorgan und dem Innenwandelement beim plastischen Verformen des Riegelabschnitts bewirken. Die Anlagefläche und die Gegenfläche wirken vorzugsweise als Gleitflächen, von denen wenigstens eine zum Beispiel räumlich schräg zur Steckrichtung ausgerichtet sein kann.

Eine vorteilhafte Ausgestaltung des Erfindungsgegenstandes ist dadurch charakterisiert, dass das Steckorgan einen ersten Steckabschnitt und einen zweiten Steckabschnitt aufweist, wobei im Verbindungszustand eines Steckorgans mit zwei Innenwandelementen der erste Steckabschnitt des Steckorgans in ein Inneres des einen Innenwandelements eingreift und der zweite Steckabschnitt des Steckorgans in ein Inneres des anderen Innenwandelements eingreift.

Damit wird ein kompakter und stabiler Verbindungszustand zwischen dem Steckorgan und zwei miteinander mittels des Steckorgans verbundenen benachbarten Innenwandelementen ermöglicht.

Zwei Innenwandelemente sind mittels eines Steckorgans verbindbar, wobei die Innenwandelemente und das Steckorgan ausgestaltet sind, dass das Steckorgan im verbundenen Zustand der Innenwandelemente im Inneren der beiden Innenwandelemente zumindest im Wesentlichen aufgenommen ist. Vorzugsweise ist das Steckorgan komplett bzw. nahezu komplett versenkt in dem Hohlraum der Innenwandelemente. Das Steckorgan kann eine gerade Grundform haben, zum Beispiel um zwei Innenwandelemente, deren Längsachsen auf einer Raumachse liegen zu verbinden bzw. ein gegenüber einem einzelnen Innenwandelement ein gleichartiges Innenwandelement in zweifacher Länge zu erhalten. Wenn das Steckorgan winkelförmig ist mit zwei z. B. rechtwinklig stehenden Steckabschnitten sind die Innenwandelemente entsprechend rechtwinklig ausgerichtet verbindbar insbesondere für die Bildung eines Eckbereichs eines Rahmenteils.

Schließlich ist es auch vorteilhaft, dass an einem Innenwandelement mehrere Riegelabschnitte ausgestaltet sind, die in einem vorgegebenen Abstandsmaß vorhanden sind.

Vorzugsweise sind versetzt in Längsrichtung des Innenwandelements unterseitig in einem ersten Endbereich zwei paarweise gegenüberliegende also vier Riegelabschnitte und im anderen Endbereich ebenfalls zwei paarweise gegenüberliegende also vier Riegelabschnitte an vorgegebenen Stellen vorgesehen.

Entsprechend gilt dies auch für die Aufnahmekonturen am Steckorgan auf der Unterseite der Steckabschnitte.

Die Erfindung erstreckt sich außerdem auf ein Möbel, insbesondere ein Möbel mit einer Schublade mit einer Vorrichtung gemäß einer der oben genannten Ausbildungen. Die Einteilungsvorrichtung ist dabei in dem Innenraum der Schublade eingelegt zur Unterbringung von Gegenständen in den verschiedenen unterteilten Bereichen der Einteilungsvorrichtung.

Damit lässt sich an einem Möbel der Innenraum der Schublade individuell unterteilen, insbesondere durch mehrere Rahmenteile, deren Längsseiten und Querseiten aus wenigen in der Länge ggf. sich unterscheidende aber ansonsten gleichen Innenwandelementen individuell mit den Steckorganen bzw. Eckverbindern zusammensteckbar und verriegelbar sind.

### Figurenbeschreibung

Weitere Merkmale und Vorteile der Erfindung sind anhand der in den Figuren schematisch dargestellten erfindungsgemäßen Ausführungsbeispiele näher erläutert. Im Einzelnen zeigt:
- Figur 1: eine perspektivische Ansicht eines erfindungsgemäßen Möbels schräg von oben,
- Figur 2: ein teilweise dargestelltes Möbelteil aus Figur 1 mit einer erfindungsgemäßen Vorrichtung in perspektivischer Ansicht schräg von oben,
- Figur 3: in perspektivischer Ansicht ein aus Innenwandelementen und Steckorganen gebildetes Rahmenteil der erfindungsgemäßen Vorrichtung aus Figur 2 mit einem Trennelement,
- Figur 4 und 5: ein Steckorgan der erfindungsgemäßen Vorrichtung in perspektivischer Ansicht und in einer Unteransicht,
- Figur 6: das Rahmenteil gemäß Figur 3 in einer Vorderansicht,
- Figur 7: einen Ausschnitt des Rahmenteils gemäß Figur 3 im Schnitt gemäß der Linie A-A in Figur 6,
- Figur 8: ein vergrößerter Bereich eines Teils einer Unterseite eines Innenwandelements und darin eingestecktem Steckorgan (ausschnittsweise dargestellt) in einer Verriegelungsstellung von Riegelabschnitten an der Innenwandelement-Unterseite,
- Figur 9: einen Ausschnitt des Rahmenteils gemäß Figur 3 in einer Unteransicht in einer Ausgangsstellung von Riegelabschnitten der Vorrichtung,
- Figur 10: das Rahmenteil gemäß Figur 9 im Schnitt gemäß der Linie B-B in Figur 9,
- Figur 11: ein vergrößertes Detail gemäß des umrandeten Ausschnitts C in Figur 10 mit einem angedeuteten Bedienwerkzeug,
- Figur 12: den Ausschnitt des Rahmenteils gemäß Figur 9 in einer Verriegelungsstellung der Riegelabschnitte,
- Figur 13: das Rahmenteil gemäß Figur 12 im Schnitt gemäß der Linie D-D in Figur 12,
- Figur 14: ein vergrößertes Detail gemäß des umrandeten Ausschnitts E in Figur 13,
- Figur 15: eine vergrößerte perspektivische Teildarstellung des betreffenden Rahmenteils schräg von unten,
- Figur 16: eine Seitenansicht eines Innenwandelements der erfindungsgemäßen Vorrichtung mit zwei eingesteckten Steckorganen und
- Figur 17: ein perspektivisch gezeigtes Steckorgan aus Figur 16 in Einzelansicht.

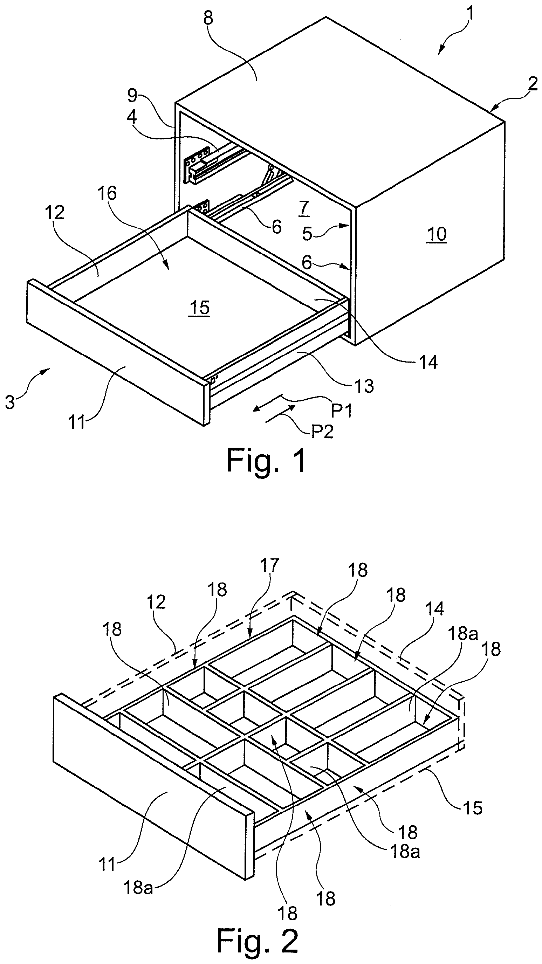

Figur 1 zeigt schematisiert einen Teil eines Möbels 1 mit einem Möbelkorpus 2, an welchem zwei als Schublade ausgebildete Möbelteile verschiebbar aufgenommen werden können, wobei lediglich eine untere Schublade 3 der beiden übereinander anordenbaren Schubladen dargestellt ist.

Zur Bewegungsführung der nicht dargestellten oberen Schublade sind eine erste Führungseinheit 4 und eine zweite Führungseinheit 5, welche in Figur 1 verdeckt ist, vorgesehen. Die Führungseinheiten 4, 5 sind insbesondere als Teil- bzw. Vollauszug ausgebildet. Die untere Schublade 3 ist im Möbelkorpus 2 über zwei weitere Führungseinheiten 6, die gegenüberliegend auf der gleichen Höhe innen an Seitenwänden 9 und 10 des Möbelkorpus 2 z. B. angeschraubt vorgesehen sind, verschieblich.

Die Schublade 3 ist gemäß des Pfeils P1 relativ zum Möbelkorpus 2 horizontal herausziehbar, um an einen Innenraum 16 bzw. an ein Aufnahmevolumen für in der Schublade 3 unterbringbare Gegenstände heranzukommen. In Schließrichtung P2 ist die Schublade 3 in das Innere des Möbelkorpus 2 einschiebbar.

Der Möbelkorpus 2 umfasst außerdem einen Korpusboden 7 und ein gegenüberliegend ebenfalls horizontal ausgerichtetes Abdeckteil 8 und eine nicht ersichtliche Rückwand. Zwischen dem Korpusboden 7 und dem Abdeckteil 8 sind die vertikal ausgerichteten Seitenwände 9, 10 vorhanden.

Die Schublade 3 weist ein Frontelement 11, zwei gegenüberliegende Schubladeseitenwände 12, 13, eine Schubladenrückwand 14 und einen Schubladenboden 15 auf. Oberhalb des Schubladenbodens 15 wird der Innenraum 16 der Schublade 3 bereitgestellt.

Die Schublade 3 ist in Figur 2 perspektivisch dargestellt, wobei die Schubladenseitenwand 13 weggelassen ist und die Schubladenseitenwand 12, die Schubladenrückwand 14 und der Schubladenboden 15 nur gestrichelt angedeutet sind. In der Schublade 3 ist gemäß Figur 2 eine erfindungsgemäße Vorrichtung zur Einteilung des Innenraums 16 der Schublade 3 vorhanden, wobei die erfindungsgemäße Vorrichtung als Einteilungsvorrichtung, nachfolgend als Einteilungssystem 17 benannt, ausgebildet ist.

Das Einteilungssystem 17 umfasst mehrere Rahmenteile 18, von denen einzelne die gleichen Abmessungen aufweisen und andere sich in den Abmessungen unterscheiden. Einzelne Rahmenteile 18 weisen innen ein Trennelement 18a auf. Die Rahmenteile 18 sind so benachbart zueinander positioniert bzw. in ihren Abmessungen derart abgestimmt, dass das Einteilungssystem 17 im Grundriss rechteckige Form aufweist, so dass die Grundfläche des Innenraums 16 vollständig von dem Einteilungssystem 17 abgedeckt ist und in der Schublade 3 positionsfest bzw. unverrückbar aufgenommen ist.

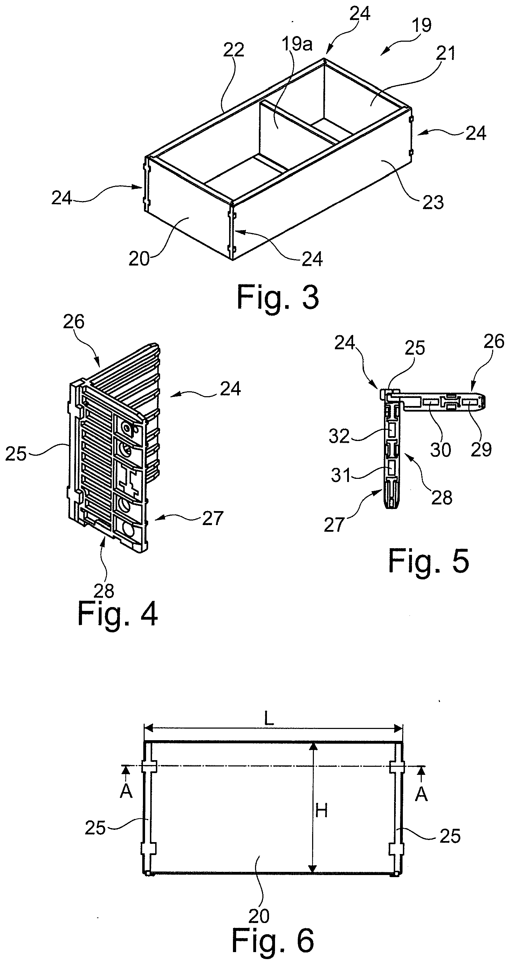

Ein im Grundriss rechteckförmiges Rahmenteil 19 des erfindungsgemäßen Einteilungssystems 17 zeigt Figur 3, wobei das Rahmenteil 19 aus den gleichen Komponenten wie die Rahmenteile 18 aufgebaut ist.

Das Rahmenteil 19 besteht aus vier in der Grundform identischen Innenwandelementen 20-23, die sich allein in der Länge unterscheiden und mit vier Steckorganen des Einteilungssystems 17 zusammengesteckt und miteinander fest verbunden bzw. verriegelt sind. Das Rahmenteil 19 mit einem innen angeordneten Trennelement 19a umfasst die zwei gleichlangen kürzere Innenwandelemente 20 und 21, die zueinander parallel ausgerichtet sind und gegenüberliegende Querseiten des Rahmenteils 19 bilden. Zwei weitere gleichlange längere Innenwandelemente 22 und 23, die parallel und quer zu den Innenwandelementen 20, 21 ausgerichtet sind, bilden gegenüberliegende Längsseiten des Rahmenteils 19.

Die Innenwandelemente 19 bis 23 sind Hohlprofilelemente bzw. innen hohl und bei dem gezeigten Ausführungsbeispiel aus einem Blechstahlmaterial im Biegeverfahren aus einem ebenen flachen Blech hergestellt.

Das Rahmenteil 19 wird im Steckverfahren zusammengebaut, wobei die vier Innenwandelemente 20 bis 23 jeweils im Bereich ihrer beiden aufrechten offenen Stirnseiten über ein Steckorgan durch Steckverbindungen mit dem benachbarten Innenwandelement verbunden sind. Hierfür ist in jedem Eckbereich des Rahmenteils 19 ein Steckorgan vorhanden, wobei die vier Steckorgane jeweils als Eckverbinder 24 ausgestaltet sind.

Der Eckverbinder 24 ist vorzugsweise ein Kunststoffteil mit zwei rechtwinklig zueinander stehenden jeweils geraden einstückig gebildeten Steckabschnitten 26 und 27 (s. Figuren 4 und 5).

Die beiden Steckabschnitte 26, 27 sind in einem Außeneckbereich mit einem Funktionsabschnitt versehen zum Beispiel aus einem elastischen Schaummaterial und/oder einem federnden Abschnitt zur Bereitstellung eines an Gegenflächen anschmiegbaren Anlagebereichs 25. Am Rahmenteil 19 ergeben sich damit an den vier Außen-Eckbereichen die Anlagebereiche 25, die im Eckkantenbereich und nach außen und nach unten bzw. etwas über die äußeren Hauptflächenseiten der Innenwandelemente 20-23 und deren schmalen Unterseiten überstehen.

Übertragen auf das Einteilungssystem 17 sind bei dem in der Schublade 3 im Innenraum 16 eingesetzten Einteilungssystem 17 die Anlagebereiche 25 jeweils an Gegenflächen von benachbarten Rahmenteilen 18 und/oder Innenflächen des Frontelements 11, der Schubladeseitenwände 12, 13, der Schubladenrückwand 14 bzw. dem Schubladenboden 15 in Anlage. Dies verhindert ein Verrutschen bzw. störende Rutschgeräusche des in der Schublade 3 untergebrachten Einteilungssystems 17.

Figur 6 verdeutlicht eine Höhe H und eine Länge L des Innenwandelements 20, das zum Beispiel eine Breite bzw. Dicke von ca. 5 Millimeter aufweist und typischerweise eine Höhe von ca. 6 Zentimeter und eine Länge von ca. 10 Zentimeter aufweist.

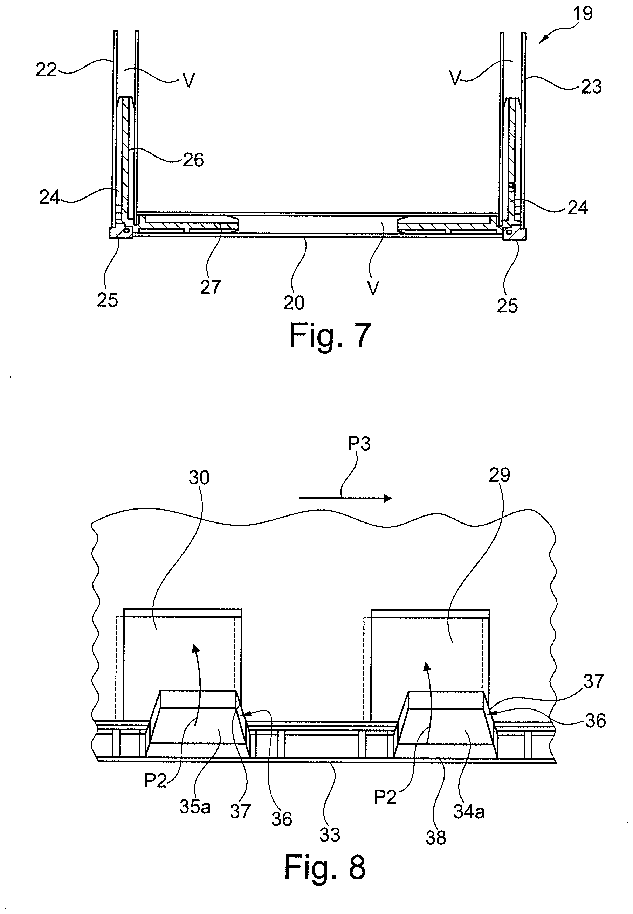

Figur 7 verdeutlicht, wie bei dem Rahmenteil 19 die beiden Eckverbinder 24 jeweils in einem Eckbereich des Rahmenteils 19 in das Innere der dazugehörigen Innenwandelemente 20 und 22 bzw. 20 und 23 hineinragen und die Anlagebereiche 25 geringfügig über die Außenseiten der Innenwandelemente 20 bis 23 überstehen.

Im zusammengesteckten Zustand der Innenwandelemente 20-23 gemäß des Rahmenteils 19 greifen bei den vier Eckverbindern 24 beide Steckabschnitte 26, 27 in das jeweilige hohle Innenvolumen V (s. Fig. 7) jeweils eines Innenwandelements der beiden miteinander zusammengesteckten bzw. verbundenen rechtwinklig stehenden Innenwandelemente 20-23 ein. Die Innenwandelemente 20-23 sind entsprechend beidseitig stirnseitig offen. Die beiden Steckabschnitte 26, 27 sind so abgestimmt, dass sie dabei reibend an Innenflächen eines Innenwandelements 20-23 einsteckbar und vorfixiert gehalten sind.

Zur Fertigstellung einer gewünschten bzw. notwendigen Einstecktiefe zwischen einem Steckabschnitt und einem Innenwandelement und zur Sicherung bzw. zur Verriegelung der Steckpartner 24 und 20-23 in der erreichten Endlage der SteckVerbindung, ist die erfindungsgemäße Vorrichtung bzw. das Einteilungssystems 17 vorteilhaft ausgebildet.

Gemäß Figur 5 sind auf einer Unterseite 28 des Eckverbinders 24 vier untereinander identische Ausnehmungen 29-32 vorhanden. Davon sind die zwei Ausnehmungen 29, 30 auf der Unterseite des Steckabschnitts 26 an definiert vorgegebenen Stellen bzw. mit vorgegebenem Abstand ausgebildet. An den exakt gleichen Stellen bezogen auf die Längserstreckung der Unterseite des jeweiligen Steckabschnitts 26 und 27 sind die beiden Ausnehmungen 31 und 32 auf der Unterseite des Steckabschnitts 27 ausgebildet.

Jede Ausnehmung 29-32 ist im dargestellten Ausführungsbeispiel als im Grundriss rechteckförmige Vertiefungen bzw. als im Wesentlichen quaderförmige Vertiefungen ausgestaltet mit einer Tiefe von z. B. wenigen Millimetern wie 1 bis 2 Millimetern und einer Länge von ca. 5 Millimeter und einer Breite von ca. 2 Millimeter. Andere Formen und Abmessungen der Ausnehmungen 29-32 sind möglich, insbesondere abhängig von der Form und Größe von mit den Ausnehmungen 29-32 zusammenwirkenden Riegelabschnitten, was weiter unten erklärt ist.

Die Ausnehmungen 29-32 bilden jeweils eine Aufnahmekontur für zwei zugeordnete Riegelabschnitte an dem betreffenden Innenwandelement 20-23, um bei den Eckverbindern 24 und dem jeweiligen Innenwandelement 20-23 eine gewünschte Einstecktiefe sicher einzurichten und in dieser den Eckverbinder 24 und das jeweilige Innenwandelement 20-23 im Hinblick auf eine Relativbewegung zwischen Eckverbinder 24 und Innenwandelement 20-23 zu sichern bzw. miteinander zu verriegeln.

Jedes der Innenwandelemente 20-23 weist an seiner Unterseite mehrere Riegelabschnitte 34a, 34b, 35a und 35b auf, welche plastisch verformbar bzw. verbiegbar sind. Die untereinander gleichartigen Riegelabschnitte 34a, 34b, 35a und 35b sind beispielhaft als bis auf eine Materialbrücke 38 teilweise aus dem Blechmaterial einer Unterseite 33 der Innenwandelemente 20-23 freigeschnittene Biegelaschen bzw. Blechlaschen ausgebildet. Die Riegelabschnitte 34a, 34b, 35a und 35b der Innenwandelemente 20, 22 und 23 sind in den Figuren 8 bis 15 gezeigt und der damit zusammenhängende Wirkmechanismus nachfolgen erklärt.

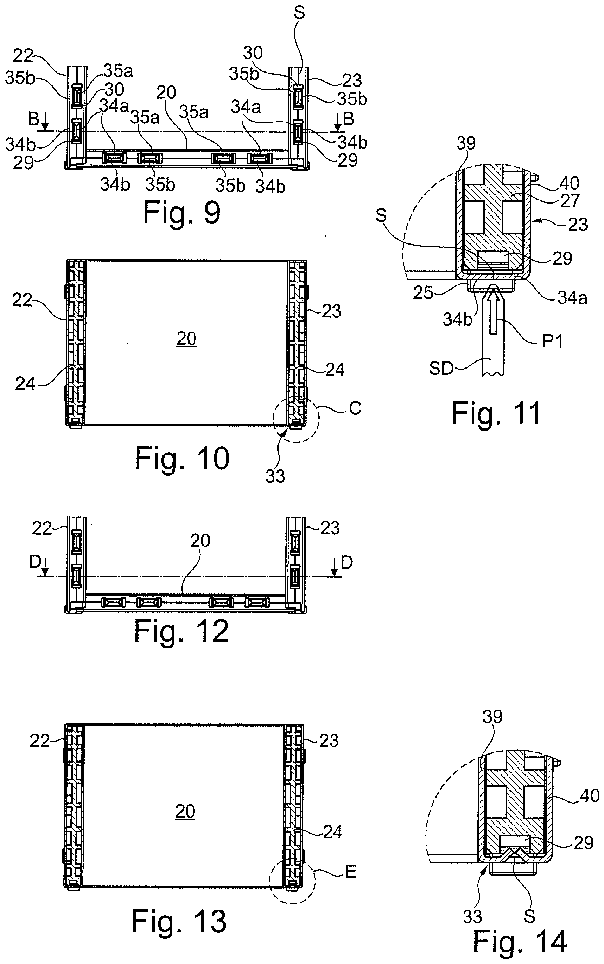

Den Steckzustand der beiden Eckverbinder 24 in den Innenwandelementen 20 und 22 des einen Eckverbinders 24 und in den Innenwandelementen 20 und 23 des anderen Eckverbinders 24, wobei die Riegelabschnitte 34a, 34b, 35a und 35b nicht betätigt bzw. verbogen sind, also noch kein Verriegelung eingerichtet ist, zeigen die Figuren 9 bis 11.

Wie insbesondere Figur 11 verdeutlicht bilden die nicht betätigten Riegelabschnitte 34a, 34b einen Teil der ebenen Unterseite 33 des Innenwandelements 23. Die Unterseite 33 bildet eine streifenförmige Schmalseite des Innenwandelements 23 und ist rechtwinklig zwischen einer vertikalen Innenseite 39 und einer vertikalen Außenseite 40 des Innenwandelements 23 ausgerichtet. Im Zwischenraum zwischen der Innenseite 39 und der Außenseite 40 ist der Steckabschnitt 27 des eingesteckten Eckverbinders 24 untergebracht. Die unterseitige nach unten offene Ausnehmung 29 am Steckabschnitt 27 ist oberhalb der beiden gegenüberliegenden und vorne über einen schmalen Spalt S getrennten Riegelabschnitte 34a und 34b positioniert.

Zur Verriegelung des zusammengesteckten Teils des Rahmenteils 19 gemäß der Figuren 9-11 wird von außen auf jeweils auf die gegenüberliegenden Riegelabschnitte 34a, 34b und 35a, 35b zum Beispiel mit der Spitze eines Schraubendrehers SD in Richtung P1 drückend eingewirkt und die Riegelabschnitte 34a, 34b und 35a, 35b nach innen in die Ausnehmung 29, 30 hinein verbogen bzw. plastisch verformt, bis der Zustand gemäß der Figuren 12-14 erreicht ist. Für die beiden Eckbereiche des Rahmenteils 19 gemäß Figur 9 werden demgemäß in die vier Ausnehmungen 29, 30 an einem Eckverbinder 24 acht Riegelabschnitte 34a, 34b, 35a, 35b hineinverbogen, also bei beiden Eckverbindern 24 zwischen dem Innenwandelement 20 und den beiden anschließenden Innenwandelementen 22 und 23 gemäß Figur 9 insgesamt 16 Riegelabschnitte. Zur Betätigung sind dafür acht Eindrückvorgänge mit dem Schraubendreher SD nötig, da immer zwei gegenüberliegende Riegelabschnitte 34a, 34b bzw. 35a, 35b gleichzeitig bzw. paarweise betätigbar sind.

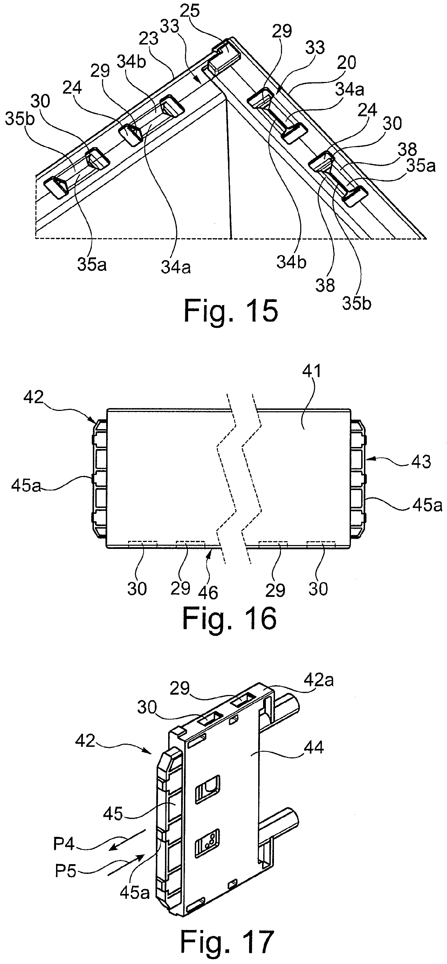

Den so erreichbaren Verriegelungszustand zeigen die Figuren 8 und 12-14. Figur 15 zeigt einen Eckbereich-Ausschnitt des Rahmenteils 19 in einer Unteransicht, wobei sämtliche Riegelabschnitte 34a, 34b, 35a, 35b an der Unterseite 33 des Innenwandelements 23 in der Ausgangsstellung sind, also nicht betätigt bzw. nicht nach innen verbogen sind. Die sämtlichen Riegelabschnitte 34a, 34b, 35a, 35b an der Unterseite 33 des anderen Innenwandelements 20 sind hingegen bereits verriegelnd bzw. nach innen in die Ausnehmung 29 hinein verbogen, was die Riegelabschnitte 34a, 34b angeht, und die Riegelabschnitte 35a, 35b in die Ausnehmung 30 hineingreifend verbogen.

Die Innenwandelemente 20-23 bzw. deren Riegelabschnitte 34a, 34b, 35a, 35b und die Eckverbinder 24 mit den Ausnehmungen 29-32 sind so abgestimmt, dass im Falle eines zwar schon nahezu aber nicht maximal tief eingesteckten Zustand eines Eckverbinders 24 in ein Innenwandelement 20-23, was in Figur 8 durch den gestrichelt umrandeten Teil des Eckverbinders 24 dargestellt ist, mit dem Verbiegen eines Riegelabschnitts 34a, 34b, 35a, 35b eine Anschlag-Steckstellung zwischen dem Eckverbinder 24 und dem Innenwandelement 20-23 erreicht wird. Denn bei nicht exakt maximal tief eingestecktem Zustand des Eckverbinders 24 in ein Innenwandelement 20-23 trifft beim Verbiegen in Richtung P2 des Riegelabschnitts eine stirnseitig vorhandene Anlagefläche 36 an jedem Riegelabschnitt 34a, 34b, 35a, 35b auf eine in jeder Ausnehmung 29, 30 vorhandene Gegenfläche 37, so dass bei einem als positionsfest angenommenen Innenwandelement 20-23 der Eckverbinder 24 maximal tief in das Innere des Innenwandelements 20-23 in Richtung P3 gedrückt wird. Dies ist in Figur 8 mit den Bewegungspfeilen P2 und P3 angedeutet.

Figur 16 zeigt ein Innenwandelement 41 der erfindungsgemäßen Vorrichtung mit zwei eingesteckten Steckorganen, die jeweils als identische Klinkenstecker 42 und 43 ausgebildet sind. In Figur 17 ist der Klinkenstecker 42 mit seiner Unterseite 42a nach oben gerichtet dargestellt, wobei zwei Ausnehmungen 29 und 30 an der Unterseite 42a vorhanden sind, die bei den Klinkenstecker 42 und 43 in Figur 16 verdeckt sind und lediglich gestrichelt angedeutet sind.

Das Innenwandelement 41 ist entsprechend der Innenwandelemente 20-23 insbesondere mit Riegelabschnitten 34a, 34b, 35a, 35b ausgestaltet. Das Innenwandelement 41 mit den gemäß Figur 16 im Hohlvolumen des Innenwandelements 41 eingesteckten und verriegelten Klinkenstecker 42 und 43 dient insbesondere zur wahlweisen Positionierung zwischen gegenüberliegenden Wandungen von Innenwandelementen des Einteilungssystems 17, also z. B. im Innenraum eines Rahmenteils 18 oder zwischen zwei über einen Zwischenraum beabstandeten Rahmenteilen 18 oder zwischen gegenüberliegenden Abschnitten einschließlich der Innenseite der Schubladenseitenwände, des Frontelements oder der Schubladenrückwand der Schublade 3.

In einem Grundkörper 44 des Klinkensteckers 42 ist ein federkraftbeaufschlagtes Klinkenteil 45 verschieblich untergebracht und in Richtung P4 vorgespannt mit einer außen vorstehenden schmalen Anschlagseite 45a. Das Klinkenteil 45 ist in Richtung P5 gegen die Federkraft eindrückbar.

Entsprechend der oben beschriebenen Verriegelung werden zur Verriegelung mit Riegelabschnitten 34a, 34b, 35a, 35b (in Figur 16 nicht bezeichnet) an der Unterseite 46 des Innenwandelements 41 und mit den Ausnehmungen 29 und 30 an den Klinkensteckern 42, 43 die Riegelabschnitte 34a, 34b, 35a, 35b nach innen in die Ausnehmungen 29 und 30 der beiden Klinkenstecker 42 und 43 hinein verbogen, so dass die Riegelabschnitte 34a, 34b, 35a, 35b in die Ausnehmungen 29 und 30 eingreifen, so dass die Klinkenstecker 42 und 43 im Innenwandelement 41 fixiert sind.

### Bezugszeichenliste:

| | | | |
|---|---|---|---|
| 1 | Möbel | 25 | Anlagebereich |
| 2 | Möbelkorpus | 26,27 | Steckabschnitt |
| 3 | Schublade | 28 | Unterseite |
| 4,5 | Führungseinheit | 29,30 | Ausnehmung |
| 6 | Führungseinheit | 31,32 | Ausnehmung |
| 7 | Korpusboden | 33 | Unterseite |
| 8 | Abdeckteil | 34a,34b | Riegelabschnitt |
| 9,10 | Seitenwand | 35a,35b | Riegelabschnitt |
| 11 | Frontelement | 36 | Anlagefläche |
| 12,13 | Schubladenseitenwand | 37 | Gegenfläche |
| 14 | Schubladenrückwand | 38 | Materialbrücke |
| 15 | Schubladenboden | 39 | Innenseite |
| 16 | Innenraum | 40 | Außenseite |
| 17 | Einteilungssystem | 41 | Innenwandelement |
| 18 | Rahmenteil | 42 | Klinkenstecker |
| 18a | Trennelement | 42a | Unterseite |
| 19 | Rahmenteil | 43 | Klinkenstecker |
| 19a | Trennelement | 44 | Grundkörper |
| 20,21 | Innenwandelement | 45 | Klinkenbauteil |
| 22,23 | Innenwandelement | 45a | Anschlagseite |
| 24 | Eckverbinder | 46 | Unterseite |

## Patentansprüche

1. Schubladen-Inneneinteilungsvorrichtung (17) zur Einteilung eines Innenraums eines bewegbaren Möbelteils, insbesondere eines Innenraums (16) einer Schublade (3), wobei die Vorrichtung (17) ein Innenwandelement (20-23, 41) und ein auf das Innenwandelement (20-23, 41) abgestimmtes Steckorgan (24, 42, 43) aufweist, die miteinander verbindbar sind, wobei aus mehreren Innenwandelementen (20-23, 41) ein Rahmenteil (18, 19) der Vorrichtung (17) bildbar ist, das im Innenraum des Möbelteils anordenbar ist, wobei Verriegelungsmittel mit einem Riegelabschnitt (34a, 34b, 35a, 35b) an dem Innenwandelement (20-23, 41) und einer Aufnahmekontur (29-32) an dem Steckorgan (24, 42, 43) vorhanden sind, wobei der Riegelabschnitt (34a, 34b, 35a, 35b) und die Aufnahmekontur (29-32) derart aufeinander abgestimmt sind, dass das Steckorgan (24, 42, 43) und das Innenwandelement (20-23, 41) im verbundenen Zustand miteinander verriegelbar sind, wobei in einem verbundenen Zustand des Steckorgans (24, 42, 43) und des Innenwandelements (20-23, 41) der Riegelabschnitt (34a, 34b, 35a, 35b) durch ein plastisches Verformen aus einer Ausgangsstellung in eine Verriegelungsstellung bringbar ist, so dass der Riegelabschnitt (34a, 34b, 35a, 35b) in der Verriegelungsstellung in die Aufnahmekontur (29-32) am Innenwandelement (20-23, 41) hineinragt, **dadurch gekennzeichnet, dass** der Riegelabschnitt (34a, 34b, 35a, 35b) an einer als Schmalseite ausgebildeten Unterseite (33, 46) des Innenwandelements (20-23, 41) ausgebildet ist und die Aufnahmekontur(29-32) an einer Unterseite (28, 42a) des Steckorgans (24, 42, 43) vorhanden ist, so dass bei der Verwendung der Schubladen-Inneneinteilungsvorrichtung (17) die Verriegelungsmittel verdeckt sind.

2. Schubladen-Inneneinteilungsvorrichtung (17) nach Anspruch 1, **dadurch gekennzeichnet, dass** das Rahmenteil aus mehreren Innenwandelementen (20-23, 41) gebildet ist, wobei zwei Innenwandelemente (20-23, 41) mit dem Steckorgan (24, 42, 43) durch eine Steckverbindung miteinander verbindbar sind, und wobei das Rahmenteil (18, 19) zur Einteilung des Möbelteil-Innenraums im Innenraum des Möbelteils anordenbar ist.

3. Schubladen-Inneneinteilungsvorrichtung (17) nach einem der vorhergehenden Ansprüche 1 und 2, **dadurch gekennzeichnet, dass** das Innenwandelement (20-23, 41) als Hohlprofil ausgebildet ist.

4. Schubladen-Inneneinteilungsvorrichtung (17) nach einem der vorhergehenden Ansprüche, **dadurch gekennzeichnet, dass** mehrere Riegelabschnitte (34a, 34b, 35a, 35b) an einem Innenwandelement (20-23, 41) vorgesehen sind.

5. Schubladen-Inneneinteilungsvorrichtung (17) nach einem der vorhergehenden Ansprüche, **dadurch gekennzeichnet, dass** an einem Steckorgan (24, 42,43) mehrere Aufnahmekonturen für ein zuordenbares Innenwandelement (20-23, 41) vorgesehen sind.

6. Schubladen-Inneneinteilungsvorrichtung (17) nach einem der vorhergehenden Ansprüche, **dadurch gekennzeichnet, dass** der Riegelabschnitt (34a, 34b, 35a, 35b) und die Aufnahmekontur derart aufeinander abgestimmt sind, dass mit dem Einrichten der Verriegelungsstellung des Riegelabschnitts das Innenwandelement (20-23, 41) und das Steckorgan (24, 42,43) zwangsweise relativ zueinander bewegbar sind, bis eine Anschlag-Steckstellung zwischen dem Steckorgan (24, 42,43) und dem Innenwandelement (20-23, 41) erreicht ist.

7. Schubladen-Inneneinteilungsvorrichtung (17) nach einem der vorhergehenden Ansprüche, **dadurch gekennzeichnet, dass** der Riegelabschnitt (34a, 34b, 35a, 35b) eine Anlagefläche (36) aufweist, welche für ein Zusammenwirken mit einer Gegenfläche (37) an der Aufnahmekontur (29-32) ausgebildet ist.

8. Schubladen-Inneneinteilungsvorrichtung (17) nach einem der vorhergehenden Ansprüche, **dadurch gekennzeichnet, dass** das Steckorgan (24) einen ersten Steckabschnitt (26) und einen zweiten Steckabschnitt (27) aufweist, wobei im Verbindungszustand eines Steckorgans (24) mit zwei Innenwandelementen (20-23) der erste Steckabschnitt (26) des Steckorgans in ein Inneres des einen Innenwandelements (20-23) eingreift und der zweite Steckabschnitt (27) des Steckorgans in ein Inneres des anderen Innenwandelements (20-23) eingreift.

9. Schubladen-Inneneinteilungsvorrichtung (17) nach einem der vorhergehenden Ansprüche, **dadurch gekennzeichnet, dass** zwei Innenwandelemente (20-23, 41) mittels eines Steckorgans (24) verbindbar sind, wobei die Innenwandelemente (20-23) und das Steckorgan (24) ausgestaltet sind, dass das Steckorgan (24) im verbundenen Zustand der Innenwandelemente (20-23) im Inneren der beiden Innenwandelemente (20-23) zumindest im Wesentlichen aufgenommen ist.

10. Schubladen-Inneneinteilungsvorrichtung (17) nach einem der vorhergehenden Ansprüche, **dadurch gekennzeichnet, dass** an einem Innenwandelement (20-23, 41) mehrere Riegelabschnitte (34a, 34b, 35a, 35b) ausgestaltet sind, die in einem vorgegebenen Abstandsmaß vorhanden sind.

11. Möbel, insbesondere Schublade (3) mit einer Schubladen-Inneneinteilungsvorrichtung (17) nach einem der vorhergehenden Ansprüche.

## Claims

1. Interior drawer divider (17) for dividing an interior space of a movable furniture part, in particular an interior space (16) of a drawer (3), wherein the divider (17) has an interior-wall element (20-23, 41) and a plug-in member (24, 42, 43) which is coordinated with the interior-wall element (20-23, 41), and the interior-wall element and plug-in member can be connected to one another, wherein a plurality of interior-wall elements (20-23, 41) can be used to form a frame part (18, 19) of the divider (17), and the frame part can be arranged in the interior of the furniture part, wherein locking means are present, with a catch portion (34a, 34b, 35a, 35b) on the interior-wall element (20-23, 41) and an accommodating contour (29-32) on the plug-in member (24, 42, 43), wherein the catch portion (34a, 34b, 35a, 35b) and the accommodating contour (29-32) are coordinated with one another such that, in the connected state, the plug-in member (24, 42, 43) and the interior-wall element (20-23, 41) can be locked to one another, wherein, when the plug-in member (24, 42, 43) and the interior-wall element (20-23, 41) are in a connected state, the catch portion (34a, 34b, 35a, 35b) can be moved out of a starting position into a locking position as a result of plastic deformation, and therefore, in the locking position, the catch portion (34a, 34b, 35a, 35b) projects into the accommodating contour (29-32) on the interior-wall element (20-23, 41), **characterized in that** the catch portion (34a, 34b, 35a, 35b) is formed on an underside (33, 46) of the interior-wall element (20-23, 41), said underside being in the form of a narrow side, and the accommodating contour (29-32) is present on an underside (28, 42a) of the plug-in member (24, 42, 43), and therefore, when use is made of the interior drawer divider (17), the locking means are concealed.

2. Interior drawer divider (17) according to Claim 1, **characterized in that** the frame part is formed from a plurality of interior-wall elements (20-23, 41), wherein two interior-wall elements (20-23, 41), with the plug-in member (24, 42, 43), can be connected to one another by a plug-in connection, and wherein the frame part (18, 19) can be arranged in the interior space of the furniture part for the purpose of dividing the interior space of the furniture part.

3. Interior drawer divider (17) according to either of preceding Claims 1 and 2, **characterized in that** the interior-wall element (20-23, 41) is designed in the form of a hollow profile.

4. Interior drawer divider (17) according to one of the preceding claims, **characterized in that** a plurality of catch portions (34a, 34b, 35a, 35b) are provided on an interior-wall element (20-23, 41).

5. Interior drawer divider (17) according to one of the preceding claims, **characterized in that** a plug-in member (24, 42, 43) has provided on it a plurality of accommodating contours for an interior-wall element (20-23, 41) which can be assigned thereto.

6. Interior drawer divider (17) according to one of the preceding claims, **characterized in that** the catch portion (34a, 34b, 35a, 35b) and the accommodating contour are coordinated with one another such that, as the locking position of the catch portion is established, the interior-wall elements (20-23, 41) and the plug-in member (24, 42, 43) can be forcibly moved relative to one another until a plug-in-stop position between the plug-in member (24, 42, 43) and the interior-wall element (20-23, 41) has been reached.

7. Interior drawer divider (17) according to one of the preceding claims, **characterized in that** the catch portion (34a, 34b, 35a, 35b) has a stop surface (36), which is designed to interact with a mating surface (37) on the accommodating contour (29-32).

8. Interior drawer divider (17) according to one of the preceding claims, **characterized in that** the plug-in member (24) has a first plug-in portion (26) and a second plug-in portion (27), wherein, when a plug-in member (24) and two interior-wall elements (20-23) are in the connected state, the first plug-in portion (26) of the plug-in member engages inside the one interior-wall element (20-23) and the second plug-in portion (27) of the plug-in member engages inside the other interior-wall element (20-23).

9. Interior drawer divider (17) according to one of the preceding claims, **characterized in that** two interior-wall elements (20-23, 41) can be connected by means of a plug-in member (24), wherein the interior-wall elements (20-23) and the plug-in member (24) are formed that, when the interior-wall elements (20-23) are in the connected state, the plug-in member (24) is accommodated at least substantially inside the two interior-wall elements (20-23).

10. Interior drawer divider (17) according to one of the preceding claims, **characterized in that** a plurality of catch portions (34a, 34b, 35a, 35b) are formed at a predetermined distance apart from one another on an interior-wall element (20-23, 41).

11. Piece of furniture, in particular a drawer (3) having an interior drawer divider (17) according to one of the preceding claims.

## Revendications

1. Dispositif de compartimentage intérieur de tiroir (17) pour le compartimentage d'un espace intérieur d'une partie de meuble mobile, notamment d'un espace intérieur (16) d'un tiroir (3), le dispositif (17) comprenant un élément de paroi intérieur (20-23, 41) et un organe d'enfichage (24, 42, 43), adapté à l'élément de paroi intérieur (20-23, 41), qui peuvent être reliés l'un à l'autre, une partie de cadre (18, 19) du dispositif (17), qui peut être agencée dans l'espace intérieur de la partie de meuble, pouvant être formée à partir de plusieurs éléments de paroi intérieurs (20-23, 41), des moyens de verrouillage munis d'une section de verrou (34a, 34b, 35a, 35b) étant présents au niveau de l'élément de paroi intérieur (20-23, 41) et un contour de réception (29-32) étant présent au niveau de l'organe d'enfichage (24, 42, 43), la section de verrou (34a, 34b, 35a, 35b) et le contour de réception (29-32) étant adaptés l'un à l'autre de telle sorte que l'organe d'enfichage (24, 42, 43) et l'élément de paroi intérieur (20-23, 41) puissent être verrouillés l'un à l'autre à l'état relié ; à un état relié de l'organe d'enfichage (24, 42, 43) et de l'élément de paroi intérieur (20-23, 41), la section de verrou (34a, 34b, 35a, 35b) pouvant être amenée par une déformation plastique d'une position initiale dans une position de verrouillage de telle sorte que, dans la position de verrouillage, la section de verrou (34a, 34b, 35a, 35b) pénètre dans le contour de réception (29-32) au niveau de l'élément de paroi intérieur (20-23, 41), **caractérisé en ce que** la section de verrou (34a, 34b, 35a, 35b) est formée au niveau d'un côté inférieur (33, 46), formé en tant que petit côté, de l'élément de paroi intérieur (20-23, 41), et le contour de réception (29-32) est présent au niveau d'un côté inférieur (28, 42a) de l'organe d'enfichage (24, 42, 43), de telle sorte que lors de l'utilisation du dispositif de compartimentage intérieur de tiroir (17), les moyens de verrouillage soient cachés.

2. Dispositif de compartimentage intérieur de tiroir (17) selon la revendication 1, **caractérisé en ce que** la partie de cadre est formée à partir de plusieurs éléments de paroi intérieurs (20-23, 41), deux éléments de paroi intérieurs (20-23, 41) pouvant être reliés l'un à l'autre avec l'organe d'enfichage (24, 42, 43) par une liaison d'enfichage, et la partie de cadre (18, 19) pouvant être agencée dans l'espace intérieur de la partie de meuble pour le compartimentage de l'espace intérieur de la partie de meuble.

3. Dispositif de compartimentage intérieur de tiroir (17) selon l'une quelconque des revendications 1 et 2 précédentes, **caractérisé en ce que** l'élément de paroi intérieur (20-23, 41) est configuré sous la forme d'un profilé creux.

4. Dispositif de compartimentage intérieur de tiroir (17) selon l'une quelconque des revendications précédentes, **caractérisé en ce que** plusieurs sections de verrou (34a, 34b, 35a, 35b) sont prévues au niveau d'un élément de paroi intérieur (20-23, 41).

5. Dispositif de compartimentage intérieur de tiroir (17) selon l'une quelconque des revendications précédentes, **caractérisé en ce que** plusieurs contours de réception pour un élément de paroi intérieur pouvant être associé (20-23, 41) sont prévus au niveau d'un organe d'enfichage (24, 42, 43).

6. Dispositif de compartimentage intérieur de tiroir (17) selon l'une quelconque des revendications précédentes, **caractérisé en ce que** la section de verrou (34a, 34b, 35a, 35b) et le contour de réception sont adaptés l'un à l'autre de telle sorte que lors de l'établissement de la position de verrouillage de la section de verrou, l'élément de paroi intérieur (20-23, 41) et l'organe d'enfichage (24, 42, 43) soient déplacés avec force l'un par rapport à l'autre jusqu'à ce qu'une position d'enfichage d'arrêt soit atteinte entre l'organe d'enfichage (24, 42, 43) et l'élément de paroi intérieur (20-23, 41).

7. Dispositif de compartimentage intérieur de tiroir (17) selon l'une quelconque des revendications précédentes, **caractérisé en ce que** la section de verrou (34a, 34b, 35a, 35b) comprend une surface d'application (36), qui est configurée pour coopérer avec une contre-surface (37) au niveau du contour de réception (29-32).

8. Dispositif de compartimentage intérieur de tiroir (17) selon l'une quelconque des revendications précédentes, **caractérisé en ce que** l'organe d'enfichage (24) comprend une première section d'enfichage (26) et une deuxième section d'enfichage (27) ; dans l'état de liaison d'un organe d'enfichage (24) avec deux éléments de paroi intérieurs (20-23), la première section d'enfichage (26) de l'organe d'enfichage pénétrant à l'intérieur d'un élément de paroi intérieur (20-23) et la deuxième section d'enfichage (27) de l'organe d'enfichage pénétrant à l'intérieur de l'autre élément de paroi intérieur (20-23).

9. Dispositif de compartimentage intérieur de tiroir (17) selon l'une quelconque des revendications précédentes, **caractérisé en ce que** deux éléments de paroi intérieurs (20-23, 41) peuvent être reliés au moyen d'un organe d'enfichage (24), les éléments de paroi intérieurs (20-23) et l'organe d'enfichage (24) étant conçus que l'organe d'enfichage (24) est au moins partiellement reçu à l'intérieur des deux éléments de paroi intérieurs (20-23) à l'état relié des éléments de paroi intérieurs (20-23).

10. Dispositif de compartimentage intérieur de tiroir (17) selon l'une quelconque des revendications précédentes, **caractérisé en ce que** plusieurs sections de verrou (34a, 34b, 35a, 35b) sont conçues au niveau d'un élément de paroi intérieur (20-23, 41), qui sont présentes à un écartement prédéterminé.

11. Meuble, notamment tiroir (3) muni d'un dispositif de compartimentage intérieur de tiroir (17) selon l'une quelconque des revendications précédentes.
